# EUROPÄISCHE PATENTSCHRIFT

(11) **EP 0 364 793 B1**
(45) Veröffentlichungstag und Bekanntmachung des Hinweises auf die Patenterteilung: **07.07.1993**
(21) Anmeldenummer: 89118120.8
(22) Anmeldetag: 29.09.1989
(51) Int. Cl.: B60J 1/20

(54) **Rollo für Fenster von Fahrzeugen**
Vehicle window curtain
Rideau pour fenêtre de véhicule

(30) Priorität: 21.10.1988 DE 3835891
(43) Veröffentlichungstag der Anmeldung: 25.04.1990
(73) Patentinhaber: DAIMLER-BENZ AKTIENGESELLSCHAFT, 70327 Stuttgart (DE)
(72) Erfinder: Vollmer, Meinrad, D-7407 Rottenburg 1 (DE)

(56) Entgegenhaltungen:
- EP-A- 0 111 270
- EP-A- 0 342 355
- DE-A- 3 206 140
- US-A- 1 793 731

## Beschreibung

Die Erfindung betrifft ein Rollo für Fenster von Fahrzeugen nach dem Oberbegriff des Anspruches 1.

Aus der DE-A- 32 06 140 ist ein Rollo für Fahrzeugfenster bekannt, das eine drehbare Aufwickelrolle umfaßt, die mit ihren Enden fahrzeugfest gelagert ist. In Autobussen wird eine derartige Aufwickelrolle aus optischen und Platzgründen möglichst parallel zu einer oberen Fensterkante ausgerichtet, wonach ein Rollotuch senkrecht von dieser nach unten ziehbar ist, bis es die Fensterscheibe gegen Lichteinfall überdeckt. In neueren Autobuskonstruktionen gibt es Fahrzeugfenster, deren obere und untere Fensterkanten parallel zum geneigten Fahrzeugdach gegenüber einer Horizontalen von vorne nach hinten ansteigend verlaufen. Wenn es hierbei nicht erwünscht oder mangels Bauraum nicht möglich ist, die Aufwickelrolle horizontal anzuordnen, wodurch sie also in einem Winkel zur oberen Fensterkante verlaufen würde, so ergibt sich notgedrungen für eine parallele Anordnung der Aufwickelrolle zur oberen Fensterkante und eine dazu senkrechte Abwickelrichtung des Rollotuchs eine Überdeckung der Scheibenfläche, die ein Fensterscheibendreieck freilassen würde. Dieser Mangel wird hier dadurch beseitigt, daß die Aufwickelrolle an einem Ende bewegbar gelagert ist, so daß diese beim Ziehen am Rollotuch in eine horizontale Ausrichtung verschwenkt wird, und das Rollotuch parallel zu den seitlichen, vertikalen Fensterkanten herabgezogen und verrastet werden kann. Die Aufwickelrolle ist also nicht feststehend gelagert und kann durch ihre einseitige Nachgiebigkeit zu einer Behinderung des Auf- und Abwickelvorgangs des Rollotuchs führen.

Der Erfindung liegt die Aufgabe zugrunde, ein gattungsgemäßes Rollo mit in ihrer Achsrichtung festliegender Aufwickelrolle für Fahrzeugfenster, die eine gegenüber der Horizontalen geneigte Oberkante und vertikal ausgerichtete Fenstersäulen aufweisen, auszubilden, durch das eine vollständige Überdeckung der Scheibenfläche beim Herunterziehen der Rollotuchs ermöglicht ist.

Die Aufgabe wird durch die kennzeichnenden Merkmale des Anspruches 1 gelöst.

Durch die zur geneigten Fensteroberkante parallele Ausrichtung der Aufwickelrolle überdeckt diese wenig Bauraum oberhalb des Fahrzeugfensters.

Dennoch ist es durch die einem Schraubgewindeverlauf ähnliche Abwicklung des Rollotuchs von der Aufwickelrolle möglich, das Rollotuch in vertikaler Richtung und parallel zu den Fenstersäulen herunterzuziehen, und durch die gleichzeitige Axialverschiebung der Aufwickelrolle eine Verschiebung des Rollotuchs in Horizontalrichtung zu vermeiden, so daß dieses die parallelogrammförmige Scheibenfläche in jeder Auszugsposition vollständig zwischen den Fenstersäulen abdeckt.

Die der Herunterziehbewegung des Rollotuchs angepaßte, axiale Zwangsbewegung der Aufwickelrolle führt zu einer korrekten, schraubgewindeartigen Aufwicklung des Rollotuchs um die drehbare Aufwickelrolle, wodurch Faltenwurf vermieden und eine hohe Funktionssicherheit erreicht wird.

Ein mehrgängig ausgebildetes Schraubgewinde als Führung vergrößert dabei den erreichbaren Axialverschiebungsweg der Aufwickelrolle, der von der Neigung der Aufwickelrolle abhängig ist. Die Länge des Gewindes wird von der Höhe der abzudeckenden Scheibenfläche bestimmt.

Die Gegenstände der weiteren Ansprüche bilden vorteilhafte Ausführungsmöglichkeiten der Gegenstände vorangestellter Ansprüche.

Ein Ausführungsbeispiel der Erfindung ist in der Zeichnung dargestellt.

Es zeigen:
- Figur 1: einen Autobus, im vorderen Bereich mit einem Fenster, das eine gegenüber der Horizontalen geneigte Fensteroberkante aufweist,
- Figur 2: ein erfindungsgemäßes Rollo für Fenster mit geneigter Oberkante mit wenig heruntergezogenem Rollotuch, und
- Figur 3: das Rollo aus Figur 2 mit weiter heruntergezogenem Rollotuch.

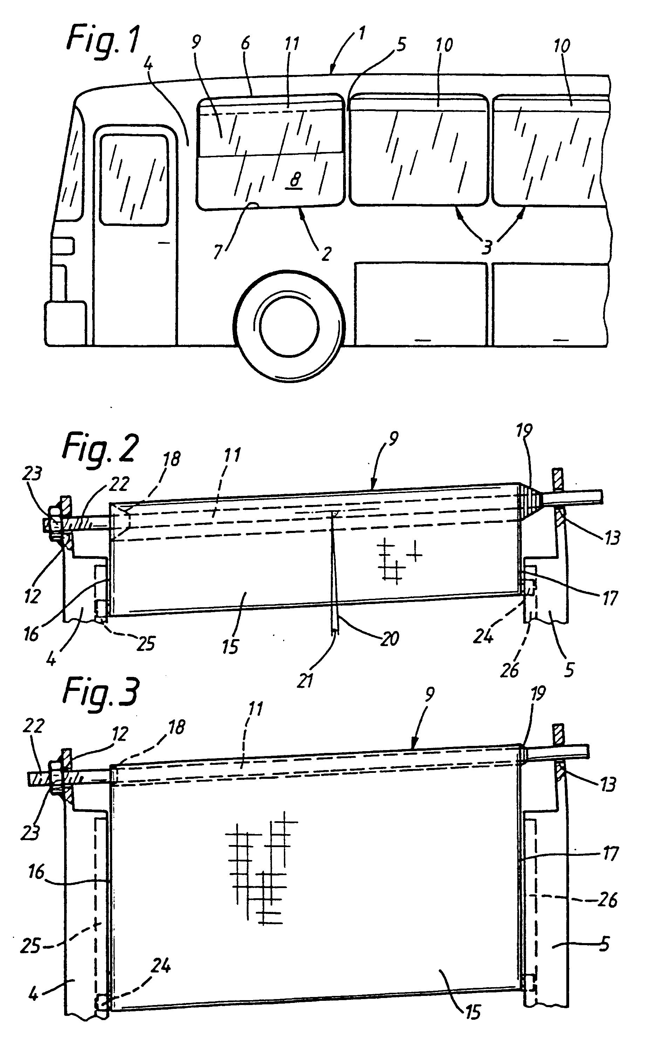

Figur 1 zeigt einen Autobus 1, der entlang seinen Fahrzeugseiten Fenster 2 bzw. 3 aufweist, wovon ein Fenster 2 vertikale Fenstersäulen 4, 5 und eine gegenüber der Horizontalen geneigte, von vorne nach hinten ansteigende Fensteroberkante 6 und Fensterunterkante 7 aufweist, wodurch sich eine parallelogrammförmige Scheibenfläche 8 ergibt. Um die Scheibenfläche 8 des Fensters 2 wie auch die Scheiben der Fenster 3 gegen Lichtdurchtritt in den Fahrzeuginnenraum abzudecken, sind im Fahrzeuginnenraum Rollos 9 bzw. 10 angeordnet, die vom Businsassen bei Bedarf nach unten auszuziehen sind.

Das Rollo 9 des Fensters 2 weist eine drehbare Aufwickelrolle 11 auf, die parallel zur geneigten Fensteroberkante 6 angeordnet ist. Wie aus den Figuren 2 und 3 ersichtlich, ist die Aufwickelrolle 11 mit ihren Enden in Aufnahmelagern 12, 13 der mit Abstand voneinander angeordneten Fenstersäulen 4, 5 abgestützt, und wird in bekannter Weise durch eine nicht dargestellte, mit einem Ende an der Aufwickelrolle 11 und gegenüberliegend z.B. an der Fenstersäule 5 festgelegte Feder in Aufwickelrichtung eines auf ihr festgelegten Rollotuchs 15 beaufschlagt.

Damit das Rollotuch 15 trotz der geneigten Aufwickelrolle 11 in allen Auszugspositionen mit seinen Seitenkanten 16, 17 parallel zu den vertikalen Fenstersäulen 4, 5 liegt, ist dieses mit einem schraubgewindeartigen Seitenkantenverlauf 18, 19 auf die Aufwickelrolle 11 aufgewickelt. Um darüberhinaus noch eine horizontale Verschiebung der Seitenkanten 16, 17 des Rollotuchs 15 bei dessen Bewegung zu vermeiden, und um ebenso eine faltenfreie, gespannte Aufwicklung zu gewährleisten, ist die Aufwickelrolle 11 beim Herunterziehen des Rollotuchs 15 in dem Maß, mit dem die Seitenkanten 16, 17 des Rollotuchs 15 von einer Senkrechten 20 zur Aufwickelrolle 11 bei vollständiger Abdeckung der Scheibenfläche 8 maximal abweichen, in ihren Aufnahmelagern 12, 13 axial in Richtung dieser Abweichung 21 verschiebbar. Diese Verschiebung wird beim Aufwickeln des Rollotuchs 15 in entgegengesetzter Richtung bis zur Ausgangslage der Aufwickelrolle 11 zurückgeführt.

Diese vom Ausziehweg des Rollotuchs 15 und von der Neigung der Aufwickelrolle 11 abhängige axiale Zwangsverschiebung der Aufwickelrolle 11 ist hier durch ein in die Aufwickelrolle 11 eingeformtes Schraubgewinde 22 gelöst, das sich im Gewinde einer säulenfesten Schraubenmutter 23 dreht und entsprechend seiner Steigung die Aufwickelrolle 11 dabei axial verschiebt. Durch ein mehrgängig ausgebildetes Schraub- bzw. Mutterngewinde kann die Gewindesteigung und damit der Verschiebeweg der Aufwickelrolle 11 vergrößert werden. Ebenfalls kann sich umgekehrt auch eine Schraubenmutter in der Aufwickelrolle und ein Schraubgewindebolzen an der Fenstersäule befinden.

Aus optischen Gründen ist das Rollotuch 15 mit seinem oberen Ende derart außermittig versetzt auf der Aufwickelrolle 11 festgelegt, was bei heruntergezogenem Rollotuch 15 in Figur 3 deutlich sichtbar ist, daß die Enden der Aufwickelrolle 11 bei aufgerolltem Rollotuch 15, wie es in Figur 2 dargestellt ist, anschließend an die sichtbaren Kanten des Rollotuchs 15 etwa gleichlang wirken.

Das Rollotuch 15, das in seinem Zuschnitt der Scheibenfläche 8 angepaßt ist, wird bei seiner Bewegung über eine horizontal an ihm festgelegte Rollotuchstange 24 in seitlichen Führungen 25, 26 entlang der Fenstersäulen 4, 5 geführt, und kann in einer bekannten Ausführungsform auch über diese Rollotuchstange 24 in verschiedenen Auszugstellungen an den Fenstersäulen 4, 5 verrastet werden.

## Patentansprüche

1. Rollo für Fenster von Fahrzeugen, insbesondere von Autobussen (1), mit einer drehbaren, mit einem Rollotuch (15) versehenen Aufwickelrolle (11), die parallel zu einer gegenüber der Horizontalen (20) geneigten Fensteroberkante (6) ausrichtbar und mit ihren Enden in Aufnahmelagern (12, 13) abgestützt ist, und einer Vorrichtung, durch die das Rollotuch (15) in allen Auszugspositionen mit seinen Seitenkanten (16, 17) parallel sowie mit gleichbleibendem Seitenabstand zu angrenzenden, vertikal angeordneten Fenstersäulen (4, 5) verläuft,
**dadurch gekennzeichnet,**
daß die Wickelrichtung des Rollotuches (15), dem Neigungswinkel der Aufwickelrolle (11) entsprechend, schräg verläuft und das Rollotuch (15) dadurch auf der Aufwickelrolle (11) schraubenförmig auf- und abgewickelt wird, und daß die Aufwickelrolle (11) in den Aufnahmelagern (12; 13) in dem Maße axial verschiebbar ist, in dem die Aufwickelrolle (11) durch die schraubenförmige Auf- oder Abwicklung des Rollotuches (15) gegenüber diesem versetzt wird.

2. Rollo nach Anspruch 1,
**dadurch gekennzeichnet,**
daß die drehbare Aufwickelrolle (11) durch die Zwangsbewegung eines Schraubgewindes (22) in einer Schraubenmutter (23) axial verschiebbar ist.

3. Rollo nach Anspruch 2,
**dadurch gekennzeichnet,**
daß das Schraubgewinde (22) mehrgängig ausgeführt ist.

4. Rollo nach einem der vorangegangenen Ansprüche,
**dadurch gekennzeichnet,**
daß das obere Ende des Rollotuchs (15) gegen die Abweichung (21) seiner Seitenkanten (16, 17) von der Senkrechten (20) zur Aufwickelrolle (11) außermittig versetzt auf der Aufwickelrolle (11) festlegbar ist.

5. Rollo nach Anspruch 1,
**dadurch gekennzeichnet,**
daß das Rollotuch (15) über eine quer an ihm festgelegte Rollotuchstange (24) in seitlichen Führungen (25, 26) entlang der Fenstersäulen (4, 5) führbar ist.

## Claims

1. Roller blind for the windows of vehicles, particularly coaches (1), with a rotatable take-up roller (11) provided with a roller blind cloth (15) which can be set up parallel with the top edge (6) of a window inclined relative to the horizontal (20) and is supported by its ends in receiving bearings (12, 13), and with a device by means of which the roller blind cloth runs in all pull-out positions with its side edges (16, 17) parallel, as well as at a constant lateral distance, to adjacent vertically arranged window uprights (4, 5), characterized in that the winding-up direction of the roller blind cloth (15), correspondingly to the angle of slant of the take-up roller (11) extends slantwise, and the roller blind cloth (15) is, as a result, helically wound up on, and unwound from, the take-up roller, and in that the take-up roller (11) is axially displaceable in the receiving bearings (12, 13) to the extent in which the take-up roller (11) is offset by the helical winding-on or unwinding of the roller blind cloth (15) relative to the latter.

2. Roller blind according to claim 1, characterized in that the rotatable take-up roller (11) is axially displaceable as a result of the controlled movement of a screw thread (22) in a nut (23).

3. Roller blind according to claim 2, characterized in that the screw thread (22) is multi-threaded.

4. Roller blind according to one of the foregoing claims, characterized in that the upper end of the roller blind cloth (15), in the region of the deflection (21) of its side edges (16, 17) from the vertical (20) can be secured on the take-up roller (11) eccentrically offset relative to the take-up roller (11).

5. Roller blind according to claim 1, characterized in that the roller blind cloth (15) can be guided over a roller blind cloth rod (24) secured on it in lateral guides (25, 26) along the window uprights (4, 5).

## Revendications

1. Store pour fenêtre de véhicules, notamment d'autobus (1), comportant une barre d'enroulement tournante (11), pourvue d'une toile de store (15), qui peut être orientée parallèlement à un bord supérieur (6) de fenêtre incliné par rapport à l'horizontale (20) et qui est soutenue à ses extrémités dans des paliers récepteurs (12, 13), ainsi qu'un dispositif à l'aide duquel la toile de store (15) est orientée, dans toutes les positions de déroulement , de façon que ses bords latéraux (16, 17) soient parallèles et espacés latéralement d'une distance constante des montants (4, 5) adjacents, disposés verticalement, d'une fenêtre, caractérisé en ce que le sens d'enroulement de la toile de store (15) est orienté en oblique , en correspondance à l'angle d'inclinaison de la barre d'enroulement (11) et la toile de store (15) est ainsi enroulée et déroulée avec une forme hélicoïdale sur la barre d'enroulement (11) et en ce que la barre d'enroulement (11) est déplaçable axialement dans les paliers récepteurs (12, 13) d'une distance telle que la barre d'enroulement (11) soit décalée par rapport à la toile de store (15) sous l'effet de l'enroulement ou de déroulement hélicoïdal de cette dernière.

2. Store selon la revendication 1, caractérisé en ce que la barre d'enroulement tournante (11) est déplaçable axialement par le mouvement forcé d'une partie filetée (22) dans un écrou fileté (23).

3. Store selon la revendication 2, caractérisé en ce que le filetage (22) est réalisé avec plusieurs filets.

4. Store selon une des revendications précédentes, caractérisé en ce que l'extrémité supérieure de la toile de store (15) peut être fixée de façon excentrée sur la barre d'enroulement (11) dans un sens opposé à l'écart (21) entre ses bords latéraux (16, 17) et la perpendiculaire (20) à la barre d'enroulement (11).

5. Store selon la revendication 1, caractérisé en ce que la toile de store (15) peut être guidée dans des guides latéraux (25, 26) le long des montants de fenêtre (4, 5) par l'intermédiaire d'une baguette fixée sur elle.
